(19) Europäisches Patentamt / European Patent Office / Office européen des brevets

(11) **EP 3 729 686 B1**

(12) **EUROPEAN PATENT SPECIFICATION**

(45) Date of publication and mention
of the grant of the patent:
**21.01.2026 Bulletin 2026/04**

(21) Application number: **18760023.4**

(22) Date of filing: **30.07.2018**

(51) International Patent Classification (IPC):
*H04B 10/114* (2013.01)     *H04B 10/50* (2013.01)
*H04B 10/516* (2013.01)

(52) Cooperative Patent Classification (CPC):
**H04B 10/114; H04B 10/504; H04B 10/516**

(86) International application number:
**PCT/IB2018/055679**

(87) International publication number:
**WO 2019/048943 (14.03.2019 Gazette 2019/11)**

(54) **SYSTEM FOR TRANSMITTING DATA BY MEANS OF OPTICAL RADIATION AND METHOD ASSOCIATED THEREWITH**

SYSTEM ZUR ÜBERTRAGUNG VON DATEN MITTELS OPTISCHER STRAHLUNG UND VERFAHREN IM ZUSAMMENHANG DAMIT

SYSTÈME DE TRANSMISSION DE DONNÉES PAR RAYONNEMENT OPTIQUE ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.09.2017 CH 11212017**

(43) Date of publication of application:
**28.10.2020 Bulletin 2020/44**

(73) Proprietor: **S-Lux GmbH**
**6015 Luzern (CH)**

(72) Inventor: **PASQUALI, Alessandro**
**6826 Riva San Vitale (CH)**

(74) Representative: **PGA S.p.A., Milano, Succursale di Lugano**
**Via Castagnola, 21c**
**6900 Lugano (CH)**

(56) References cited:
**EP-A2- 1 089 478     US-A- 4 054 794**

• **SRIKANT P C ET AL: "SUBCARRIER MULTIPLEXED COHERENT LIGHTWAVE SYSTEMS USING COMBINED AMPLITUDE AND FREQUENCY MODULATION SCHEME", PROCEEDINGS OF IEEE TENCON'98. IEEE REGION 10 INTERNATIONAL CONFERENCE ON GLOBAL CONNECTIVITY IN ENERGY, COMPUTER, COMMUNICATION AND CONTROL. NEW DEHLI, INDIA, DEC. 17 - 19, 1998; [IEEE REGION 10 ANNUAL CONFERENCE], NEW YORK, NY : IEEE, US, 17 December 1998 (1998-12-17), pages 356 - 359, XP000878337, ISBN: 978-0-7803-4887-5, DOI: 10.1109/ TENCON.1998.798159**

**Description**

FIELD OF THE ART

The present disclosure refers to the field of transmitting optical radiation and in detail regards a system of data transmission by means of optical radiation.

The present disclosure also regards a method of data transmission by means of optical radiation.

The present disclosure also regards data transmission and reception devices which exploit the abovementioned method.

STATE OF THE ART

It is known to use the electromagnetic spectrum in the radio frequency field for the transmission of electronic data, such as images or audio. The transmission of electronic data over radio channels requires the attribution of a specific channel for each transmission, which can only be shared with multiplexing techniques.

The great diffusion of wireless transmissions for the diffusion of electronic data in broadcast mode, in simulcast mode or with transmissions selectively dedicated towards a portion of the users - especially with the increase of volume of electronic data to be exchanged that has developed in recent years - has quickly saturated the previously-available radio channels, forcing the technology community to seek new radio resources, and thus frequency bands, with increasingly high frequency, up to reaching the microwave spectrum, in order to allow the transmission of electronic data over radio channel employing wide band. The typical example is represented by radio transmission backbones for mobile telephone signals, DAB radio, high-definition television signals, which use frequency bands in the microwave region in order to have a plurality of channels adjacent to each other, each of which having sufficient band for the requested transmission type.

The massive use of wireless radio transmission for the transmission of electronic data has given rise to various problems. A first problem is given by the fact that radio transmissions often exploit radio channels that are overlapped, or in any case transmission spectra of adjacent channels interfere therewith, or other interference sources interfere therewith which are geographically situated in a position different from those of interest.

The use of radio transmissions with very high frequencies is also subjected to considerable atmospheric absorption, the latter actually being substantially increasing with the increase of the frequency for the radio frequency spectrum; consequently, in order to transmit electronic data over wide band with very high frequencies, it is typically necessary to employ very high transmission powers.

In addition, the use of particularly high radio frequencies especially for proximal transmissions and for consumer applications is currently the subject of debate regarding the harmfulness for the health.

The use of radio transmissions for transmitting electronic data is often limiting or entirely non-actuatable in specific environments in which the atmosphere is subject to risk of explosion. In particular, in the European Union, the applicant indicates that there is the directive AtEx 2014/34/UE for regulating apparatuses intended for use in zones with explosion risk.

The applicant has also observed that the range of a radio transmission cannot be precisely predicted; in other words, a user who decides to receive a radio transmission of electronic data is able (or not able) to have, in his/her receiver, a sufficient radio power only on the basis, as a non-limiting example, of a change of antenna. The unpredictability of the boundaries of radio transmissions is such that a WiFi network that the user would like to be only intended for his/her own home can in fact be picked up even outside the home thereof. This leads to privacy problems, presently resolved by means of encryption of the flow of electronic data transmitted in the networks; nevertheless, there are daily examples of violation of the WiFi network encryption protocols.

Transmissions of electronic data which employ light radiation are known. Such optical transmissions use an AM modulation, which has the limit of a direct transmission. In other words, the AM modulation employed for optical transmission of electronic data is such that if an optically opaque object is interposed between a photoemitter and a photoreceiver that are modulated in AM with an input signal, the photoreceiver substantially is unable to reproduce, as an output, a copy of the signal placed as an input to the photoemitter. In other words, the AM modulation of a data signal is direct.

EP 1 089 478 A2 - -discloses a transmitting unit that receives in input an already modulated AM-SCM signal, and that further comprises an FM modulator configured to modulate with a frequency modulation the signals received at the input of the transmitting unit.

Srikant P C et al.: "Subcarrier multiplexed coherent lightwave systems using combined amplitude and frequency modulation scheme" Proceedings of IEEE Tencon '98 IEEE Region 10, International Conference on Global Connectivity in Energy, Computer, communication and Control. New Dehli, India, Dec. 17-19, 1998, discloses an amplitude and frequency modulation system for coherent optical system with multiplexed subcarriers.

US 4,054,794 discloses an optical free space transmission system for video and audio signals using a combination of AM and FM modulations.

The purpose of the present disclosure is to describe a device and a method for transmitting and receiving electronic data by means of optical radiation which contribute to reducing the impact and preferably resolving the above-described drawbacks.

## SUMMARY

The object of the invention is a transmitter device and associated method and a receiver device and associated method according to the independent claims.
The subject of the present disclosure is described in the following aspects.

Transmitter device

According to a first aspect of the disclosure is therefore realized a transmitter device (99) transmitting by means of optical radiation (108), said device being characterized in that it comprises at least one modulator stage (101) comprising:

- an input (105) adapted to receive during use an electrical signal (s(t)) to be modulated, and
- an output (107) transmitting towards at least one photoemitter (100) a voltage or current driving signal (v7(t), i7(t)), for which said electrical signal (s(t)) represents a modulating signal, where said at least one photoemitter (100) transmits an optical radiation (108) with radiation intensity Ir(t) variable in accordance with said driving signal (v7(t), i7(t)), and wherein, between said input and said output of said modulator stage (101), a cascade of a first AM modulator (102) and of a second FM modulator (103) is present, said FM modulator (103) being placed downstream of said AM modulator (102) and having an own output directly connected with the output (107) of said modulator stage (101), wherein said AM modulator (102) has an input directly connected to said input (105) of said modulator stage and is directly supplied by means of said electrical signal (s(t)) to be modulated and wherein said AM modulator (102) has an output on which it generates an intermediate signal (s2(t)) supplied as an input to said FM modulator (103).

According to a further non-limiting aspect, or second aspect, said intermediate signal (s2(t)) is directly supplied as an input to the FM modulator (103).
According to a further non-limiting aspect, or third aspect, the device comprises said at least one photoemitter (100), and said photoemitter is a photoemitter whose light intensity curve as a function of said driving signal (v7(t), i7(t)) is not constant and/or wherein said photoemitter (100) is configured to emit and/or during use emits an optical radiation variable in accordance with said driving signal (v7(t), i7(t)).
According to a further non-limiting aspect, or fourth aspect, said photoemitter (100) has a pass band greater than the pass band of said driving signal (v7(t), i7(t)).
According to a further non-limiting aspect, or fifth aspect, said electrical signal (s(t)) is an audio signal and/or a base band signal.

According to a further non-limiting aspect, or sixth aspect, a driving stage (104) is also present for said at least one photoemitter (100) interposed between said output (107) of said modulator stage (101) and said at least one photoemitter (100), wherein said driving stage (104) is configured to condition and/or process said driving signal (v7(t), i7(t)); optionally said driving stage (104) comprises means and/or a device for signal processing comprising at least one operating configuration such that said radiation intensity (Ir(t)) variable in accordance with said driving signal comprises a first continuous part (I), independent of said driving signal and a second time variable part that is a direct function of said driving signal (v7(t), i7(t)), wherein said time variable part that is a direct function of said driving signal (v7(t), i7(t)) is lower in absolute value than the absolute value taken by said first continuous part.
According to a further non-limiting aspect, or seventh aspect, said driving stage (104) is configured to condition and/or process said driving signal (v7(t), i7(t)) and comprises processing means comprising at least one operating configuration in which it supplies said photoemitter (100) with an electrical signal having a first direct current or voltage signal component, of value independent of the value taken by said driving signal (v7(t), i7(t)), and a second time variable signal component, direct function of said driving signal, wherein said second time variable component is lower in absolute value than the absolute value taken by said first component and/or wherein the driving signal as an output from said driving stage (104) and supplied to said photoemitter (100) is always positive and/or greater than zero.
According to a further non-limiting aspect, or eighth aspect, dependent on the first or on the aforesaid second aspect, said intermediate signal (s2(t)) supplied as an input to said FM modulator (103) is a signal adapted to cause a variation of the instantaneous frequency that said driving signal (v7(t)), i7(t)) assumes at the output of said FM modulator (103).
According to a further non-limiting aspect, or ninth aspect, said device comprises at least one reference frequency generation stage (109), wherein said reference frequency generation stage (109) is electrically connected with a frequency reference input of said AM modulator (102) and generates at least one first reference frequency (f0) for said AM modulator.
As an alternative to the aforesaid ninth aspect, according to a further non-limiting aspect, or tenth aspect, said reference frequency generation stage (109) is electrically connected with a frequency reference input of said AM modulator (102) by means of an own first output (109f) and is further electrically connected with a frequency reference input of said FM modulator (103) by means of an own second output (109s).
According to a further non-limiting aspect, or eleventh aspect, said reference frequency generation stage (109) generates at least one first reference frequency (f0) for said AM modulator (102) and a second reference frequency (fc) for said FM modulator (103).

According to a further non-limiting aspect, or twelfth aspect, combinable with one or more of the preceding aspects, said modulator stage (101) is configured to be supplied with an analog signal and wherein upstream of said input (105) of said modulator stage (101), a digital/analog converter is present.

Method of modulation and transmission of the signal

According to a further and thirteenth aspect of the present disclosure, is described a method of modulation and transmission of a data signal (s(t)) by means of optical radiation (108) with even indirect reflection , said method being characterized in that it comprises:

- a first step of amplitude modulation of said data signal (s(t)) by means of an AM modulator (102), wherein following said amplitude modulation step, is generated an intermediate signal (s2(t)) of which said data signal (s(t)) is a modulating signal;
- a second step of frequency modulation of said intermediate signal (s2(t)) by means of a FM modulator (103), wherein following said frequency modulation step, a voltage or current driving signal (v7(t), i7(t)) is generated;
- a step of adjusting the light radiation intensity (Ir(t)) of said optical radiation (108) emitted by at least one photoemitter (107) by means of said driving signal (v7(t), i7(t)).

According to a further aspect of the disclosure, or fourteenth aspect, the data signal (s(t)) is a base band signal and/or an audio signal, and is directly supplied to the input of said AM modulator (102).

According to a further aspect of the disclosure, or fifteenth aspect, said driving signal (v7(t), i7(t)) is directly generated following said frequency modulation step.

According to a further non-limiting aspect, or sixteenth aspect, in said step of adjusting the light radiation intensity, the radiation intensity Ir(t) rendered variable in accordance with said driving signal comprises a first continuous part (I), independent of said driving signal and a second time variable part that is a direct function of said driving signal (v7(t), i7(t)).

According to a further non-limiting aspect, or seventeenth aspect, the method comprises a step of providing said driving signal (v7(t), i7(t)) to a photoemitter (100) whose light intensity curve as a function of said driving signal (v7(t), i7(t)) is not constant and/or wherein said photoemitter (100) is configured to emit and/or during use emits an optical radiation variable in accordance with said driving signal (v7(t), i7(t)).

According to a further non-limiting aspect, or eighteenth aspect, the method comprises a step of providing said driving signal (v7(t), i7(t)) to a photoemitter (100) which has a pass band greater than the pass band of said driving signal (v7(t), i7(t)).

According to a further non-limiting aspect, or nineteenth aspect, said time variable part that is a direct function of said driving signal (v7(t), i7(t)) is lower in absolute value than the absolute value taken by said first continuous part (I).

According to a further non-limiting aspect, of twentieth aspect, said method comprises a step of conditioning and/or processing of said driving signal (v7(t), i7(t)) in order to supply said photoemitter (100) with an electrical signal having a first direct current or voltage signal component, of value independent of the value taken by said driving signal (v7(t), i7(t)) and a second time variable signal component, direct function of said driving signal, wherein said second time variable component is lower in absolute value than the absolute value taken by said first component and/or wherein the driving signal as an output from said driving stage (104) and supplied to said photoemitter (100) is always positive and/or greater than zero.

According to a further non-limiting aspect, or twenty-first aspect, said method comprises a step of generating a first reference frequency (f0) for said amplitude modulation.

According to a further non-limiting aspect, or twenty-second aspect, said method comprises a step of generating a first reference frequency (f0) for said amplitude modulation and a second reference frequency (fc) for said frequency modulation.

According to a further non-limiting aspect, or twenty-third aspect, the step of generating said first reference frequency and/or said first and said second reference frequency is performed by means of supplying an AM modulator (102) and/or an AM modulator (102) and a FM modulator (103) with a reference frequency generator (109).

According to a further non-limiting aspect, or twenty-fourth aspect, a step of converting an input signal from the numerical domain to the analog domain is present, following which the signal in said analog domain represents said data signal (s(t)).

According to a further non-limiting aspect, or twenty-fifth aspect, combinable with one or more of the preceding method aspects, a step of retrieving said data signal (s(t)) from a power grid is present.

According to a further non-limiting aspect, or twenty-sixth aspect, said data signal (s(t)) is filtered from an alternating component belonging to the network voltage present on said power grid.

Receiver device

According to a further and twenty-seventh aspect, a receiver device (199) for receiving optical radiation (108) can therefore be made, said device being adapted to cooperate with a transmitter device (99) according to one or more of the preceding aspects of the disclosure, said receiver device (199) being adapted to output a replication (s'(t)) of an electrical data signal (s(t)) by means of a hybrid AM/FM demodulation.

According to a further non-limiting aspect, or twenty-eighth aspect, combinable with said twenty-seventh aspect, said receiver device (199) is characterized in that it comprises at least one demodulator stage (201) comprising:

- an input (205) adapted to receive during use a voltage or current driving signal (v7(t), i7(t)) modulated and generated through a photoreceiver (200) connected thereto and receiving during use an optical radiation (108), also reflected, and
- an output (207) transmitting an output replication signal (s'(t)) for which said electrical signal (s(t)) represents a modulating signal,

and wherein, between said input and said output of said demodulator stage (201), a cascade of a first FM demodulator (203) and of a second AM demodulator (202) is present, said FM demodulator (203) being placed upstream of said AM demodulator (202), wherein said AM demodulator (202) has an input directly connected to the output of said FM demodulator (203).

According to a further non-limiting aspect, or twenty-ninth aspect, said input (205) of said demodulator stage (201) is directly supplied by means of said driving signal (v7(t), i7(t)) produced as an output from said photoreceiver (200).

According to a further non-limiting aspect, or thirtieth aspect, the receiver device (199) comprises a filtering stage placed downstream of said photoreceiver (200), said filtering stage being adapted to filter and/or separate and/or eliminate a continuous electrical signal component produced as an output from said photoreceiver (200) from a variable electrical signal component produced as an output from said photoreceiver, said filtering stage being adapted to create as an output said driving signal (v7(t), i7(t)).

According to a further non-limiting aspect, or thirty-first aspect, said FM demodulator (203) has an output on which it generates an intermediate signal (s2'(t)) supplied in input to said AM demodulator (202).

According to a further non-limiting aspect, or thirty-second aspect, said at least one photoreceiver (200) supplies a driving stage (204) for said demodulator stage (201), said driving stage being interposed between said input (205) of said demodulator stage (201) and said at least one photoreceiver (200), wherein said driving stage (204), in generating said driving signal (v7(t), i7(t)), is configured to identify, in the variable radiation intensity Ir(t) received during use from said photoreceiver (200), a first continuous part (I) and a second time variable part that is a direct function of said driving signal, and to generate said driving signal (v7'(t), i7'(t)) as a time variable signal, direct function of said second variable part.

According to a further non-limiting aspect, or thirty-third aspect, said intermediate signal (s2'(t)) supplied in input to said AM demodulator (202) is a signal adapted to cause a variation of the instantaneous amplitude that said replication signal (s'(t)) assumes at the output of said AM demodulator (202).

According to a further non-limiting aspect, or thirty-fourth aspect, said device comprises at least one reference frequency generation stage (109), wherein said reference frequency generation stage (109) is electrically connected with a frequency reference input of said AM demodulator (202) and generates at least one first reference frequency (f0) for said AM demodulator.

As an alternative to the aforesaid thirty-fourth aspect, according to a further non-limiting aspect, or thirty-fifth aspect, said reference frequency generation stage (109) is electrically connected with a frequency reference input of said AM demodulator (202) by means of an own first output (109f) and is further electrically connected with a frequency reference input of said FM demodulator (203) by means of an own second output (109s).

According to a further non-limiting aspect, or thirty-sixth aspect, said reference frequency generation stage (109) generates at least one first reference frequency (f0) for said AM demodulator (202) and a second reference frequency (fc) for said FM demodulator (203).

According to a further non-limiting aspect, or thirty-seventh aspect, said demodulator stage (201) produces, as an output, an analog signal.

Method for demodulation and reception of the signal

According to a further and thirty-eighth aspect of the present disclosure, it is herewith described a method for demodulation and reception of a data signal (s(t)) by means of optical radiation (108) even with indirect reflection, said method being characterized in that it comprises:

- a step of receiving through at least one photoreceiver (200) of an optical radiation (108) with light radiation intensity (Ir(t)) wherein through said at least one photoreceiver, a voltage or current driving signal (v7(t), i7(t)) is generated,
- a first step of frequency demodulation by means of a FM demodulator (203), wherein following said frequency modulation step, an intermediate signal s2'(t)) is generated, starting from said voltage or current driving signal (v7(t), i7(t));
- a second step of amplitude demodulation of said intermediate signal (s2'(t)) by means of an AM demodulator (202), wherein following said amplitude demodulation step, a replication signal of the transmitted data signal (s(t)) is generated.

According to a further non-limiting aspect, or thirty-ninth aspect, the radiation intensity Ir(t) of said optical radiation (108) comprises a first continuous part (I) and a second time variable part modulated in a hybrid manner with an AM/FM modulation.

According to a further non-limiting aspect, or fortieth aspect, said time variable part is lower in absolute value than the absolute value taken by said first continuous part (I).

According to a further non-limiting aspect, or forty-first aspect, said method comprises a filtering step, in particular performed downstream of said photoreceiver (200), said filtering step being adapted to filter and/or separate and/or eliminate a continuous electrical signal component produced as an output from said photoreceiver (200) from a variable electrical signal component produced as an output from said photoreceiver, said filtering step being adapted to cause the creation of said driving signal (v7(t), i7(t)).

According to a further non-limiting aspect, or forty-second aspect, said method comprises a step of generating a first reference frequency (f0) for said amplitude demodulation

According to a further non-limiting aspect, or forty-third aspect, said method comprises a step of generating a first reference frequency (f0) for said amplitude demodulation and a second reference frequency (fc) for said frequency demodulation.

According to a further non-limiting aspect, or forty-fourth aspect, the step of generating said first reference frequency and/or of said first and said second reference frequency is performed by means of supplying an AM demodulator (202) and/or an AM demodulator (202) and a FM demodulator (203) with a reference frequency generator (109).

According to a further non-limiting aspect, or forty-fifth aspect, a step is present for converting a replication signal s'(t) from the analog domain to the numerical domain.

Powerline

According to a further non-limiting aspect, or forty-sixth aspect, a step of transmitting said replication signal (s'(t)) towards a power grid is present.

According to a further non-limiting aspect, or forty-seventh aspect, said data signal (s(t)) is filtered by an alternating component belonging to the network voltage present on said power grid.

Pointing device

According to a further and forty-eighth aspect, is realized a reception system (300) comprising a receiver device (199) according to one or more of the preceding aspects, said system at its interior comprising an optically sensitive element (301) provided with a reception area (302) thereof and on which one or more photoreceivers (200) are installed, wherein said one or more photoreceivers (200) achieve a reception area (302) adapted to acquire at least one image in which a light variation Ir(t) transmitted by a modulated photoemitter is present, said reception system (300) comprising means for selecting a part of the reception area (302) formed by the plurality of photoreceivers (200), configured to automatically select part of the reception area (302) in which a light variation Ir(t) transmitted by a modulated photoemitter is present, and to cause the sending of a signal substantially corresponding to said light variation Ir(t) towards said demodulator stage (201) of said receiver device.

According to a further and forty-ninth non-limiting aspect of the disclosure, the selection means are mechanical and are controlled by a data processing unit.

According to a further and fiftieth non-limiting aspect of the disclosure, alternative to the aforesaid forty-ninth aspect, the selection means are achieved via software.

According to a further and fifty-first non-limiting aspect of the disclosure, in both cases wherein the selection means are achieved via software or are of mechanical type, a predetermined algorithm analyzes the signal received by said one or more photoreceivers (200) of the reception area 302 in order to find a predetermined signal modulation scheme.

According to a further and fifty-second non-limiting aspect of the disclosure, in the system (300), a tracking algorithm is also performed through which said selection means are configured in order to find if the point of the reception area (302) or on the sub-portion of the reception area (302), in which said light variation Ir(t) arrives, moves, and in order to perform an automatic pursuit thereof, hence without requiring intervention by of the user.

According to a further and fifty-third non-limiting aspect of the disclosure, dependent on said forty-first aspect, the search is without interruption of time continuity.

For greater clarity, the following definitions are applied in the present description.

Pursuant to the present disclosure, by optical radiation it is intended an optical radiation comprised in the infrared spectrum and/or in the ultraviolet spectrum and/or in the visible spectrum.

Pursuant to the present disclosure, by direct optical radiation or direct optical transmission, it is intended a transmission of an optical signal in which between a source or photoemitter and a destination or photoreceiver optically opaque obstacles are not interposed and reflections are not present. In other words, in the direct optical radiation or direct optical transmission, the transmission of the signals occurs with said source or photoemitter and the destination or photoreceiver in optical range, i.e. mutually visible.

For the purpose of improved comprehension of the present disclosure, the following further definitions are applied:

- By "transparency" it is intended a characteristic such that the material under examination can make a radiation incident thereon pass along a preferential direction, independent of the attenuation that such radiation undergoes in the passage through said material.

- By "infrared" it is intended an electromagnetic radiation which has wavelength approximately comprised between 0.7 $\mu$m and 15$\mu$m.
- By "visible" or "visible spectrum" it is intended an electromagnetic radiation which has wavelength approximately comprised between 390 and 700nm.
- By "ultraviolet" it is intended an electromagnetic radiation which has a wavelength approximately comprised between 400nm and 10nm.

## BRIEF DESCRIPTION OF THE DRAWINGS

Several embodiments and several aspects of the finding will be described hereinbelow with reference to the enclosed drawings, provided only as a non-limiting example in which:

- Figure 1 illustrates a block diagram of a modulator and of a demodulator of optical signals, operating with the hybrid AM modulation/FM according to the disclosure;
- Figure 2 illustrates a block diagram of a multi-channel receiver demodulating an optical signal with the hybrid AM/FM demodulation, object of the disclosure;
- Figure 3 illustrates a block diagram of a reception device employing the demodulator, object of the disclosure; and
- Figure 4 illustrates a block diagram of a transmitter element and of a receiver element adapted to operate on an energy distribution power grid, in which the AM/FM modulation and demodulation, object of the disclosure, is used.

## DETAILED DESCRIPTION

The present disclosure first of all relates to a method for transmitting electronic data by means of an optical signal. Such electronic data, preferably though not in a limiting manner, comprises an audio signal, hence an analog and continuous signal s(t), characterized by a predefined pass band.

In a preferred and non-limiting embodiment, the signal s(t) is a base band signal; the audio analog signal s(t), before being transmitted to a photoemitter 100 which preferably though not in a limiting manner comprises an LED diode, is subjected during transmission to a modulation step performed by a modulator stage 101 of analog and hybrid type. In a transmission module 99, which comprises the photoemitter 100, the modulator stage 101 comprises a plurality of modulators in series adapted to perform said hybrid modulation, and in detail, starting from its input 105 on which it receives the audio analog signal s(t), it first comprises an AM modulator 102 directly supplied from the aforesaid input 105, and a FM modulator 103 placed in series with the AM modulator 102 and directly supplied therefrom. The output 107 of the modulator stage 101 supplies an input of a driver stage 104 for said photoemitter 100.

In particular, the output 107 of the modulator stage 101 produces a voltage signal v7(t) or current signal i7(t) which is supplied through the driver 104 to the photoemitter 100 and which attains a driving signal. In particular if the photoemitter 100 is made from one or more LED diodes 100, it was found that the brightness of the diode is proportional to the voltage or current provided thereto as input. More in detail, the LED diode or generally the photoemitters 100 must be photoemitters whose light intensity curve as a function of the voltage or current, in particular of the driving signal, supplied thereto in input must not be constant. This signifies that the light intensity curve, and more generally the intensity of optical radiation, varies as a function of the voltage or current supplied to the photoemitter. More preferably, but not limiting, the light intensity curve of the voltage or current is substantially of linear type.

The voltage signal v7(t) or the current signal i7(t) produced as an output 107 from the modulator stage 101 are analog signals correlated with the audio input signal s(t) and, when supplied to the photoemitter 100, they produce a variation of the brightness Ir(t) of the optical beam 108 transmitted by the photoemitter proportional to the variation of voltage or current, respectively of the voltage signal v7(t) or of the current signal i7(t).

More particularly, once the input signal s(t) has been given to the AM modulator 102, such AM modulator 102 produces as an output an intermediate signal s2(t) that assumes the following form:

$$ s_2(t) = s(t)\sin\left(2\pi f_0 t\right) $$

where $f_0$ is the carrier frequency of the AM modulation.

The FM modulator 103 attains a frequency modulation, such that its instantaneous frequency assumes the form:

$$ f_i(t) = fc + k_f s_2(t) $$

wherein fc is the carrier frequency of the FM modulation.

The output signal v7(t) or i7(t) will therefore have the following form

$$ Acos\left[\left(2\pi f_c + 2\pi k_f s_2(t)\right)t\right] $$

The two carrier frequencies f0 and fc respectively of the AM or FM modulation are actual predetermined values, which nevertheless can be modified by the user according to a technique that is known and hence not described herein. Conveniently in the device object of the disclosure, a frequency generator 109 is also present, provided with a first output 109f supplying the AM modulator and a second output 109s supplying the FM modulator respectively with a sinusoidal frequency signal f0 and with a cosinusoidal frequency signal fc. Such solution should be intended as non-limiting, since it is possible to make the device object of the disclosure, in a manner such that the frequency generator 109 has a single output directed towards both the AM modulator 102 and the FM modulator 103, then giving the latter the task of generating the cosinusoidal frequency signal fc based on the signal f0 generated by the frequency generator 109. The applicant has verified that the carrier frequency fc can also be zero. In such case, the hybrid modulation takes the form of a direct modulation. In addition, the applicant has observed that the carrier frequency fc can also be greater than 1 MHz; in particular when photoemitter is an LED diode, the carrier frequency fc for the FM modulator can as a non-limiting example be up to 10 MHz. Preferably though not limiting, the carrier frequency fc for the FM modulator 103 is greater than the carrier frequency f0 for the AM modulator.

In order to avoid significant distortions of the optical beam 108 in terms of brightness variation Ir(t), the applicant has observed that the band occupied by the brightness variation signal Ir(t), and even more so the voltage signal v7(t) or current signal i7(t) supplied to the photoemitter 100, must not exceed its maximum pass band. In other words, the band occupied by the driving signal must be lower than the maximum pass band of the photoemitter 100 in order to not have distorsions. The absence of distorsions is important, especially since the signal placed as an input to the said signal modulator is an audio signal.

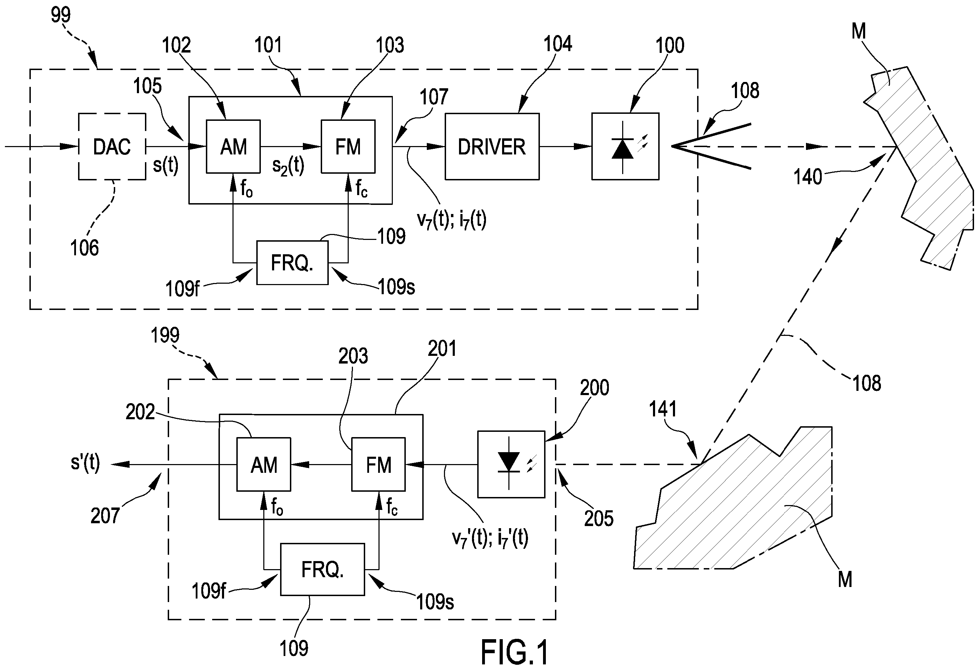

The applicant has observed that the data signal in input can also be a numerical signal. In such case, the applicant has conceived a second embodiment which differs from the first embodiment since it comprises an digital/analog converter 106 stage, placed between the input of the device and the input 105 of the modulator stage 101, which provides to transform the input data signal into an analog signal suitably adapted in order to be analogically modulated through the modulators AM 102 and FM 103, as previously described. Since the digital/analog converter 106 belongs to the second embodiment and therefore is optional with respect to the first embodiment, representing an additional module with respect to the base system of the first embodiment, in figure 1 such digital/analog converter 106 is represented with dashed line, in order to highlight the optionality of the first embodiment and the association with the second embodiment.

The applicant has observed that the optical beam 108 obtained by means of the hybrid modulation as previously described is particularly adapted for being received even over indirect paths, i.e. by means of reflection or refraction caused by surfaces that are even micrometrically incoherent, such as a wall or the like. In figure 1, there are two reflections but such number must not be intended as being limiting.

In particular, the optical beam 108, as illustrated in figure 1, is transmitted with one or more reflections 140, 141 as a non-limiting example over one or more walls M, towards a receiver device 199, which comprises at least one photoreceiver 200 which receives the reflected optical beam 108 and which transmits a voltage or current signal v7'(t) or i7'(t) - in accordance with the intensity as a function of time of said optical beam 108 - towards a demodulator stage 201, which performs a step of hybrid demodulation of the received voltage or current signal. The demodulator 201 comprises a cascade of an FM demodulator 203 and of an AM demodulator 202, in which the input of the AM demodulator 202 is directly supplied from the output of the FM demodulator 203. The FM demodulator 203 has an input 205 on which said voltage or current signal v7'(t) or i7'(t) is supplied. As in the case of the transmission side, between the FM demodulator and the photoreceiver 200 a driver can be present that is adapted to generate the voltage or current signal v7'(t) or i7'(t), termed "driving signal" for the purposes of the present disclosure for the demodulator stage, in a manner such to separate the first continuous component I from the second variable component of the optical radiation, and only send the variable component to the input of the demodulator stage.

As in the case of the modulation side, also the receiver device 199 comprises a frequency generator 109, provided with a first output 109f supplying the AM modulator and a second output 109s supplying the FM modulator respectively with a sinusoidal frequency signal fo and with a cosinusoidal frequency signal fc. Such solution is not to be intended as limiting, since it is possible to make the device object of the disclosure, in a manner such that the frequency generator 109 has a single output directed towards both the AM demodulator 202 and the FM demodulator 203, then giving the latter the task of generating the cosinusoidal signal with frequency fc based on the sinusoidal frequency signal f0 generated by the frequency generator 109. The applicant has verified that the carrier frequency fc can also be zero. In such case, the hybrid demodulation takes on the form of a direct demodulation.

The demodulator stage 201, as with the modulator stage 101, can be made with hardware or with mixed hardware-software structure, or as SDR, hence only software, without such difference constituting a limitation for the purpose of the present disclosure. The receiver device 199 then produces, on its output 199u, a replication s'(t) of the input signal s(t) at the transmitter side.

In particular, the voltage or current signal v7'(t) or i7'(t) generated by the photoreceiver is first transmitted towards the FM demodulator 203 which extracts a copy s2'(t) of the intermediate signal s2(t) that is supplied to the input of the AM demodulator 202, which performs the actual conversion towards the replication signal s'(t) of the input signal s(t) at the transmitter side.

Advantageously, the applicant has observed that the hybrid modulation and demodulation performed as described above are particularly adapted for being used for transmitting an audio analog data signal, even with transmission by means of reflections, since it has been proven that the replication s'(t) of the audio analog input signal s(t) at the transmitter side is received without audible distortions, or in any case without distortions that are capable of significantly worsening the quality of the signal.

A further embodiment of the receiver 199, object of the disclosure, is advantageously described in the following portion of the text. Such embodiment of the receiver 199 is conceived so as to allow the reception of optical signals 108 over multiple channels simultaneously, hence realizing a multichannel receiver for optical signals.

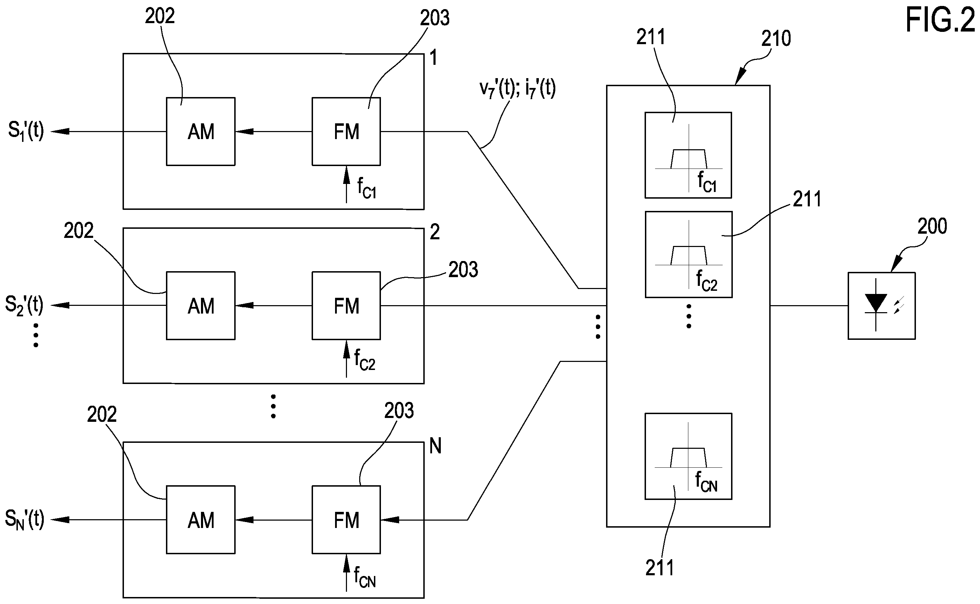

The multichannel optical receiver described hereinbelow and reported in figure 2 comprises a plurality of demodulator stages 201 arranged in parallel and having the same structure as the above-described single-channel receiver 199 (reference being made to the description thereof), but it also integrates a filtering stage 210. Such filtering stage is positioned between the photoreceiver 200 and the demodulator stage 201, and is conceived for causing the transmission of only part of the voltage signal v7'(t) or current signal i7'(t) in output from the photoreceiver, with a division by frequency bands.

In particular, the applicant has observed that, conveniently, the filtering stage 210 can integrate one or more band-pass filters 211, each centered on a central frequency thereof ideally coinciding with each of the carrier frequencies fc of the FM modulator 103. In this manner, the filtering stage performs a procedure of selection of the sub-part of the spectrum to be transmitted to the various demodulators stages 201, in a manner such that each of these can decode a channel thereof in an independent manner from the remaining demodulators 201 stages. The filtering stage 210 can be made of hardware, partially of software or entirely of software.

Advantageously the applicant has verified that the multichannel receiver described herein is particularly useful for the reception of data signals of audio type, since it allows distinguishing, as a non-limiting example, a left channel from a right channel, thus realizing a multichannel receiver adapted to be installed on a headset/earphone for the audio signal reception by means of optical transmission.

Such receiver device 199 is well-integrated in a transmission system that comprises a plurality of transmitters as described above, in which each i-th transmitter has its own FM modulator 103 operating with a carrier frequency $f_{ci}$ different from the others, and in which the receiver 199 comprises a filtering stage 210 adapted such that it can be tuned or in any case divide the N carrier frequencies $fc_i$, i=1... N of each of the transmitters towards one or more of the demodulators FM 203.

As an alternative to the above-proposed solution, the multichannel receiver described herein can be provided with a filtering stage 210 installed between the FM demodulator 203 and the FM demodulator 202, operating under the same principle as the preceding case. Nevertheless, in such case, the differentiation of the audio channels will only be given by the distinction of the carrier frequencies f0 of the various modulators AM 103 on the transmitter side, hence taking care to maintain constant the carrier frequency fc of the modulators FM 103 of the system.

The filtering stage 210 may comprise selection means adapted to allow the manual selection of sub-parts, preferably one sub-part, of the various carrier frequencies fc, so as to select for example only one channel. Such solution is particularly advantageous for the applications of multilingual signal diffusion, since each i-th transmitter can employ its own carrier frequency $fc_i$ i=1,...,N in the system in order to carry an audio signal, each in one language thereof, allowing the user to select the channel of interest by means of known selection means.

The method at the transmitter side, comprises a step of supplying an analog signal s(t) to a modulator stage 101, which performs a step of modulation first comprising a step of amplitude modulation of said analog signal s(t) in order to produce, as an output from an AM modulator 102 thereof, an amplitude-modulated intermediate signal s2(t) and further comprising a step of supplying the intermediate signal s2(t) to a FM modulator 103 in order to obtain, as an output, a voltage or current signal v7(t), i7(t) supplied as an input to a photoemitter 100, wherein the step of supplying the voltage or current signal v7(t), i7(t) to said photoemitter 100 generates a light intensity variation Ir(t) proportional to the voltage or current signal v7(t), i7(t).

Analogously, on the receiver side, said method comprises a step of receiving an optical beam 108 carrying electronic data modulated herein according to a predetermined modulation, wherein in the step of receiving at least one photoreceiver 200 it generates a voltage or current driving signal v7'(t), i7'(t) of amplitude proportional to the received light intensity Ir(t), and wherein there is a step of demodulation performed by at least one demodulator stage 201 of a receiver 199 in which the at least one demodulator stage 201 first of all performs a frequency demodulation of said voltage or current driving signal v7'(t), i7'(t) generated by the at least one photoreceiver in order to produce an intermediate signal s2'(t) and wherein said method comprises a step of supplying said intermediate signal s2'(t) to the input of an amplitude demodulator 102 of said receiver 199, which performs an amplitude demodulation in order to extract an analog data signal s(t) from said intermediate signal s2'(t).

More in detail, since the signal being transmitted is modulated by means of the superimposition of a constant component and a variable component, also the output of the photoreceiver 200 generates an electrical signal comprising a first constant voltage or current component and a second voltage or current component variable in accordance with the modulation performed, and only the latter component is effective for the decoding of the signal s'(t). For such reason, a filtering stage can be present, downstream of the photoreceiver 200, which separates and/or eliminates and/or filters the constant component of said voltage or current signal, and produces as an output the voltage or current driving signal v7'(t), i7'(t) based on the single variable voltage or current component.

In the abovementioned method, during transmission as well as during reception, the modulations - respectively of frequency and amplitude - -are sequential, and in particular: during transmission, the frequency modulation follows the amplitude modulation, while during reception the amplitude demodulation follows the frequency demodulation. During transmission, the intermediate signal s2(t) contributes to defining an instantaneous frequency of a signal which will be the object of a frequency modulation by means of the aforesaid intermediate signal s2(t).

The applicant has observed that, in the optical domain, the hybrid modulation formed by a cascade of a FM modulation of a signal previously modulated in AM renders the receivers particularly sensitive to detecting the presence of a power signal, even a very weak one.

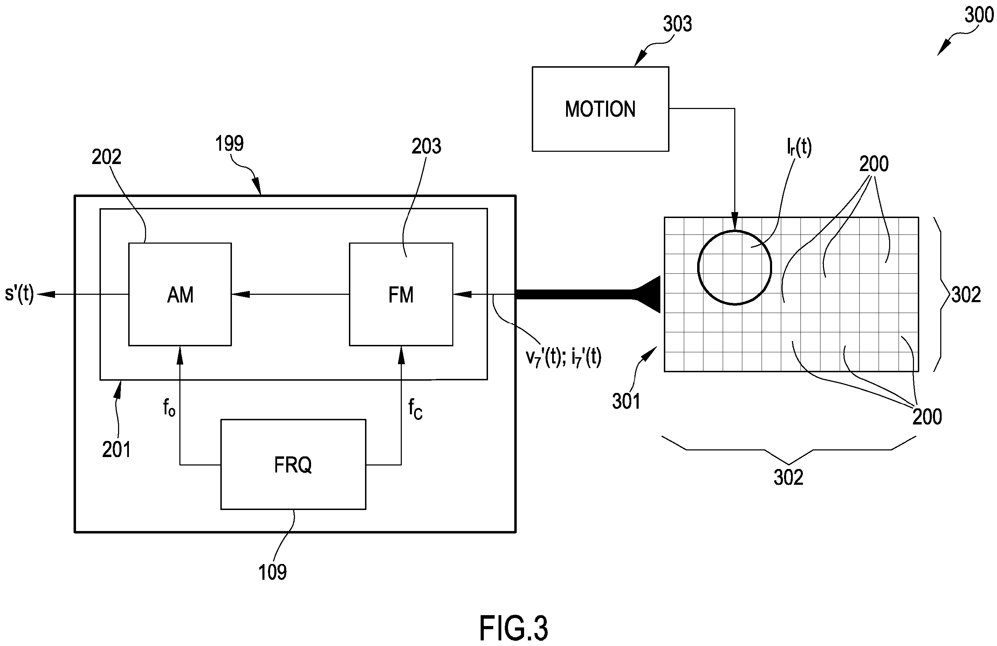

The applicant has conceived a reception system 300, comprising a receiver 199 according to that described above, which is depicted in figure 3. Such reception system 300 integrates at its interior an optically sensitive element 301 provided with a reception area 302 thereof, on which one or more photoreceivers 200 are installed. In this case, even if such solution must not be intended as being limiting, preferably the photoreceivers 200 are of CCD type, and attain a matrix in the reception area 302. The reception area 302 therefore has relative size and can be adapted to acquire an image, as well as the light variation Ir(t) transmitted by a modulated photoemitter. The assembly of the photoreceivers can therefore achieve a reception area 302 of a camera, of a video camera or of binoculars.

The receiver 199 in this case comprises means for selecting a part of the reception area 302 formed by the plurality of photoreceivers 200. Such selection means 303 are in particular configured for selecting part of the reception area 302 in which there is a light variation Ir(t) transmitted by a modulated photoemitter.

In a first non-limiting embodiment, the selection means are mechanical, e.g. attained through microarms, while in a second non-limiting embodiment the selection means are attained via software; in both cases, a predetermined algorithm analyzes the signal received by the photoreceivers 200 of the reception area 302 in order to find a predetermined signal modulation scheme. The search can occur over all the photoreceivers 200 of the area or over a part thereof by means of the selection means. When such selection means are moved, electronically or mechanically, on the sub-portion of the area in which a signal is received with light variation Ir(t) transmitted by a modulated photoemitter, the selection means perform a spatial filtering over the reception area 302 which allows more greatly isolating the light variation Ir(t) transmitted by said modulated photoemitter from the optical noise otherwise captured on the remaining portion of the reception area 302; the light variation Ir(t) transmitted by the photoemitter, which is an indication of an optical beam 108 modulated with the previously-described hybrid modulation, through the photoreceiver or the photoreceivers 200 of the abovementioned sub-portion is transformed into an electrical voltage or current signal v7'(t), i7'(t) which is sent as an input to a receiver as described above in a manner such to subsequently proceed with an extraction of the signal s(t) of interest.

According to a preferred aspect of the disclosure, in the system 300, a tracking algorithm is also performed through which the selection means are configured in order to find, preferably without interruption of time continuity, if the point of the reception area 302 or on the sub-portion of the reception area 302, in which said light variation Ir(t) arrives, moves, and in order to perform an automatic pursuit thereof, hence without requiring intervention by the user.

The applicant has in particular observed that when such system 300 is installed on a camera, on a video camera or on binoculars - in particular if provided with enlarging or telephoto lenses - it can easily happen that during the pointing operation, especially if manual, the sought-after point can be subjected to movements over the reception area 302 due to accidental movements of the pointing axis of the lens or objective. Advantageously, the applicant has realized that by implementing the tracking algorithm on the video camera, camera or binoculars integrating the system 300, it is advantageously possible to transform the aforesaid camera, video camera or binoculars into a reception device for receiving signals transmitted over an optical channel and modulated by means of hybrid FM and AM modulation, which, even if able to capture an image in the visible spectrum, is also simultaneously able to receive a signal transmitted by an optical source present in said image, even if the source itself is - to the human eye - barely visible and/or even if the modulation of the brightness of the source might appear non-existent to the human eye. For this particular aspect, the applicant has observed from its tests that an audio signal can be received even at a considerable distance, up to several kilometers, above all in non-foggy or cloudy weather conditions, through the light emission of one or more LEDs of conventional type, which, even if modulated, to the human eye appear to entirely lack light intensity variation.

In other words, a data signal and in particular an audio signal can be modulated on a photoemitter 100 or on multiple photoemitters 100 adapted for example to illuminate an environment, with a relative modulation of very low light intensity, even lower than 1/1000, without losing data and therefore without the human eye being able to perceive such modulation, not only due to its speed but also through the very limited variation of the amplitude between modulated or non-modulated signal peaks.

In particular the applicant has observed that it is convenient to allow the photoemitter 100 - in the absence of modulation - to have a constant non-zero light intensity I, on which a hybrid modulated signal is superimposed. In other words, the light radiation intensity Ir(t) is given by two components according to the following formula:

$$Ir(t) = I + kV_7(t)$$

where the first component I is the constant and/or continuous component and the second component $kV_7(t)$ is that which follows the abovementioned law $Acos[(2\pi f_c + 2\pi k_f s_2(t))t]$. In order to prevent transitions to zero, in particular if the photoemitter is an LED diode, and in particular in order to work the aforesaid diode in a zone of linearity so as to prevent modulation distortions, the portion $kV_7(t)$ would preferably (but not in a limiting manner), have to have an absolute value which is always maintained lower than the absolute value of the continuous component I. Such task is advantageously carried out by the driver stage 104. Therefore, the driver stage 104 processes and/or conditions the driving signal v7(t), i7(t), supplying, as an input to the photoemitter 100, an electrical signal which comprises a first direct current or voltage signal component, of value independent of the value taken by the driving signal v7(t), i7(t) and a second time variable signal component, direct function of the driving signal, in which the second time variable component is lower in absolute value than the absolute value taken by the first component; in other words, the signal in output from the driver stage 104 and supplied to said photoemitter 100 is always positive and/or greater than zero.

The applicant has also considered that operating the driver stage 104 in accordance with that specified above allows preventing the risk that, in the absence of signal s(t), the photoemitter 100 is driven with a zero or in any case overly low voltage such that it cannot be turned on or in any case not visibly turned on.

Through the hybrid modulation, object of the disclosure, the applicant has surprisingly found that even if the photoemitter 100 present or made to work in a region where the characteristic of optical radiation power or intensity as a function of the driving signal is non-linear, it is possible to obtain very accurate reproductions of the audio signal s'(t) when received.

The applicant has also observed that through the device, object of the present disclosure, it is possible to obtain a conveyed wave transmission system 400, comprising a transmitter element 401 and a receiver element 402, each of which connectable to the home power grid at an input 403 thereof. The transmitter element 401 comprises an output 404 in order to supply a photoemitter 100 while the receiver element integrates at least one photoreceiver 200.

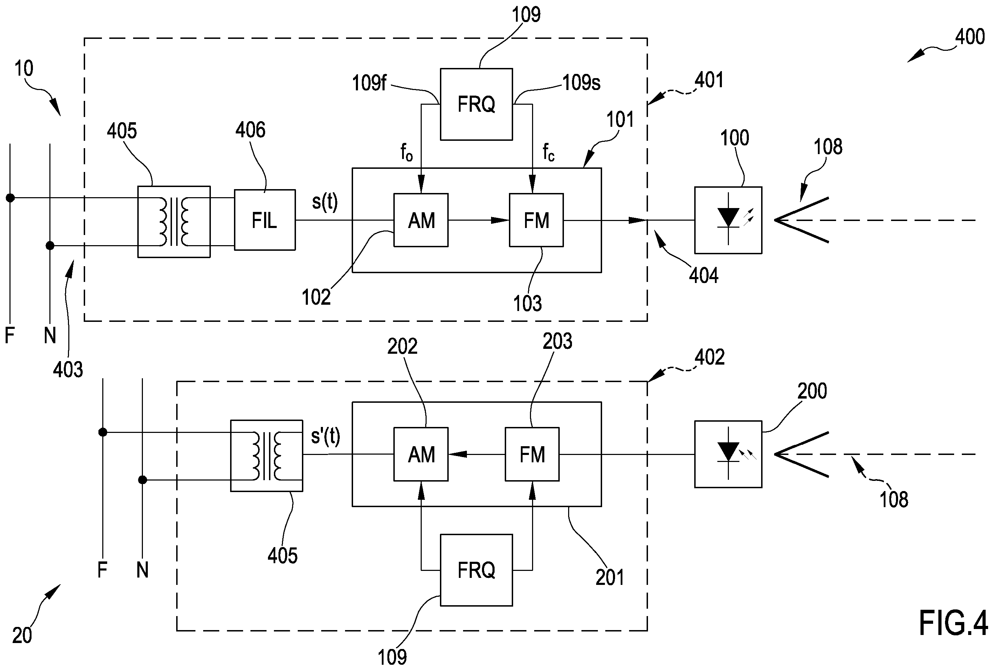

The transmitter element 401 as in figure 4 integrates, at its interior, one or more modulator stages 101 with the previously-described characteristics, and also integrates at its interior an isolator stage 405, comprising at least one transformer therein adapted to separate the network voltage section from the rest of the circuitry, especially from the modulator stage 101, whose characteristics are those described above (reference being made thereto). In the same manner, also the receiver element 402 comprises an isolator stage 405 therein in order to separate the demodulator stage 201 from the network voltage. During use, the user can inject, on the home network, a base band signal s(t). Such signal is diffused up to the transmitter element 401, which modulates it through the aforesaid modulator stage 101 with a modulation of hybrid type, as previously described, and transmits it over its output 404 in order to supply a photoemitter 100 with such modulation. At another end of the room, however, the receiver element 402 receives the optical signal modulated in a hybrid manner as described above, and, with the same procedure, demodulates it and reconverts it into a replication s'(t). The applicant has verified that the conveyed wave system 400 as described above allows diffusing, through light signals, data signals s(t) which preferably though not in a limiting manner integrate audio signals, also over electrical lines that are decoupled from each other, with an optical transmission which also ensures that the aforesaid two electrical lines decoupled from each other are in perfect galvanic isolation with respect to each other.

The applicant has also verified that, in a particular embodiment, the transmitter element 401 can also integrate the photoemitter 100, thus realizing a photoemitter with integrated hybrid modulator, hence a kind of intelligent lamp capable of electronically processing a data signal s(t) superimposed on the network signal and causing the transmission thereof via light by means of a hybrid modulation, as previously described.

The applicant has also observed that it is convenient to introduce a filtering stage of the network frequency 406, which allows isolating the component of the data signal s(t) from the 50 Hz or 60 Hz signal typical of the network frequency. Advantageously, this contributes to preventing the network frequency component, which does not represent a useful signal, from entering into the modulation of the light intensity Ir(t) transmitted by the photoemitter 100.

The applicant has observed that the advantages of the disclosure, especially in terms of indirect receivability, through the hybrid modulation and demodulation as described above are attained independently from the type of photoemitter 100, and in particular independent of whether the photoemitter is coherent - with "coherent" it being intended a monochromatic photoemitter such as a LASER - or incoherent, with "incoherent" it being intended a photoemitter that emits a polychromatic optical beam. The applicant in any case has observed that the use of coherent photoemitters improves the reception performances with respect to what could be obtained with an incoherent photoemitter.

Parts of the process described in the present disclosure can be - when possible - attained by means of a data processing unit, technically substitutable with one or more computers conceived for performing a software or firmware program portion that is predefined and loaded on a non-transient memory medium. Such software program can be written in any one programming language of known type. The computers, if there are two or more of these, can be connected together by means of a data connection such that their calculation powers are shared in any manner; the same computers can therefore be installed in positions that are even geographically different from each other.

The data processing unit can be a processor of general purpose type, especially configured through said software or firmware program in order to perform one or more parts of the method identified in the present disclosure, or be an ASIC or dedicated processor, specifically programmed for performing at least part of the operations of the method or process of the present disclosure.

## Claims

1. Transmitter device (99) for transmitting by means of free space optical radiation (108), said device comprising at least one modulator stage (101) comprising:

   - an input (105) adapted to receive during use an electrical signal (s(t)) to be modulated, and
   - an output (107) transmitting towards at least one photoemitter (100) a voltage or current driving signal (v7(t), i7(t)) for which said electrical signal (s(t)) represents a modulating signal, where said at least one photoemitter (100) transmits an optical radiation (108) with radiation intensity (Ir(t)) variable in accordance with said driving signal (v7(t), i7(t)),
   and wherein, between said input and said output of said modulator stage (101), a cascade of a first AM modulator (102) and of a second FM modulator (103) is present, said FM modulator (103) being placed downstream of said AM modulator (102) and having an own output directly connected with the output (107) of said modulator stage (101), wherein said AM modulator (102) has an input directly connected to said input (105) of said modulator stage and is directly supplied by means of said electrical signal (s(t)) to be modulated and wherein said AM modulator (102) has an output on which it generates an intermediate signal (s2(t)) supplied as an input to said FM modulator (103) the transmitter device (99) comprising said at least one photoemitter (100), and further comprising a driving stage (104) for said at least one photoemitter (100) interposed between said output (107) of said modulator stage (101) and said at least one photoemitter (100), wherein said driving stage (104) is configured to condition said driving signal (v7(t), i7(t)) and comprises processing means comprising at least one operating configuration such that said radiation intensity (Ir(t)) variable in accordance with said driving signal comprises a first constant part (I), independent of said driving signal and a second time variable part that is a direct function of said driving signal, wherein said time variable part that is a direct function of said driving signal is lower in absolute value than the absolute value taken by said first constant part.

2. Transmitter device (99) according to claim 1, wherein said intermediate signal (s2(t)) supplied as an input to said FM modulator (103) is a signal adapted to cause a variation of the instantaneous frequency that said driving signal (v7(t)), i7(t)) takes on at the output of said FM modulator (103), and/or wherein said intermediate signal (s2(t)) is directly supplied as an input to the FM modulator (103).

3. Transmitter device (99) according to one or more of the preceding claims, comprising said at least one photoemitter (100); said photoemitter being a photoemitter whose light intensity curve as a function of said driving signal (v7(t), i7(t)) is not constant and/or wherein said photoemitter (100) is configured to emit and/or during use emits an optical radiation variable in accordance with said driving signal (v7(t), i7(t)).

4. Transmitter device (99) according to one or more of the preceding claims, comprising at least one reference frequency generation stage (109), wherein:

   - said reference frequency generation stage (109) is electrically connected with a frequency reference input of said AM modulator (102) and generates at least one first reference frequency (f0) for said AM modulator, or wherein
   - said reference frequency generation stage (109) is electrically connected with a frequency reference input of said AM modulator (102) by means of an own first output (109f) and is further electrically connected with a frequency reference input of said FM modulator (103) by means of an own second output (109s) and generates at least one first reference frequency (f0) for said AM modulator (102) and a second reference frequency (fc) for said FM modulator (103).

**5.** Transmitter device (99) according to one or more of the preceding claims, wherein the driving signal as an output from said driving stage (104) and supplied to said photoemitter (100) is always positive and/or greater than zero.

**6.** Transmitter device (99) according to any one of the preceding claims, wherein said modulator stage (101) is configured to be supplied with an analogue signal and wherein, upstream of said input (105) of said modulator stage (101), a digital/analog converter is present.

**7.** Method of modulation and transmission of a data signal (s(t)) by means of free space optical radiation (108), said method comprising:

- a first step of amplitude modulation of said data signal (s(t)) by means of an **AM** modulator (102), wherein following said amplitude modulation step, is generated an intermediate signal (s2(t)) of which said data signal (s(t)) is a modulating signal;
- a second step of frequency modulation of said intermediate signal (s2(t)) by means of a **FM** modulator (103), wherein following said frequency modulation step, a voltage or current driving signal (v7(t), i7(t)) is generated;
- a step of adjusting the light radiation intensity (Ir(t)) of said optical radiation (108) emitted by at least one photoemitter (107) by means of said driving signal (v7(t), i7(t)),
wherein
- the data signal (s(t)) is a base band signal and/or an audio signal, and is directly supplied to the input of said AM modulator (102); and/or
- wherein said driving signal (v7(t), i7(t)) is directly generated following said frequency modulation step;

and wherein in said step of adjusting the light radiation intensity, the radiation intensity (Ir(t)) is made variable in accordance with said driving signal and comprises a first continuous part (I), independent of said driving signal, and a second time variable part, direct function of said driving signal (v7(t), i7(t)), wherein said time variable part that is a direct function of said driving signal (v7(t), i7(t)) is lower in absolute value than the absolute value taken by said first continuous part (I).

**8.** Method according to claim 7, comprising a step of providing said driving signal (v7(t), i7(t)) to a photoemitter (100) whose light intensity curve as a function of said driving signal (v7(t), i7(t)) is not constant and/or wherein said photoemitter (100) is configured to emit and/or during use emits an optical radiation variable in accordance with said driving signal (v7(t), i7(t)),
and/or comprising a step of providing said driving signal (v7(t), i7(t)) to a photoemitter (100) which has a pass band greater than the pass band of said driving signal (v7(t), i7(t)).

**9.** Method according to one or more of the preceding claims 7 to 8, wherein the driving signal as an output from said driving stage (104) and supplied to said photoemitter (100) is always positive and/or greater than zero.

**10.** Method according to one or more of the preceding claims 7 to 9, comprising:

- a step of generating a first reference frequency (f0) for said amplitude modulation or
- a step of generating a first reference frequency (f0) for said amplitude modulation and a second reference frequency (fc) for said frequency modulation,

wherein said step of generating said first reference frequency and/or said first and said second reference frequency is performed by means of supplying an AM modulator (102) and/or an AM modulator (102) and a FM modulator (103) with a reference frequency generator (109).

**11.** Receiver device (199) for receiving free space optical radiation comprising at least one demodulator stage (201) comprising:

- an input (205) adapted to receive, during use, a voltage or current driving signal (v7(t), i7(t)) modulated and generated through a photoreceiver (200) connected thereto and receiving during use an optical radiation (108), also reflected, and
- an output (207) transmitting an output replication signal (s'(t)) for which said electrical signal (s(t)) represents a modulating signal,
and wherein, between said input and said output of said demodulator stage (201), a cascade of a first FM demodulator (203) and of a second AM demodulator (202) is present, said FM demodulator (203) being placed upstream of said AM demodulator (202), wherein said AM demodulator (202) has an input directly connected to the output of said FM demodulator (203),
the receiver wherein said input (205) of said demodulator stage (201) is directly supplied by means of said driving signal (v7(t), i7(t)) produced as an output from said photoreceiver (200) and/or wherein said FM demodulator (203) has an output on which it generates an intermediate signal (s2'(t)) supplied in input to said AM demodulator (202), the receiver device (199) further comprising a filtering stage placed downstream of said photoreceiver (200), said filtering stage being adapted to filter and/or separate and/or eliminate a continuous electrical signal component produced as an output from said photoreceiver (200) from a variable electrical signal component produced as an output from said photoreceiver, said filtering stage being adapted to create said driving signal (v7(t), i7(t)) as an output, and/or wherein said at least one photoreceiver (200) supplies a driving stage for said demodulator stage (201), said driving stage being interposed between said input (205) of said demodulator stage (201) and said at least one photoreceiver (200), wherein said driving stage in generating said driving signal (v7(t), i7(t)), is configured to identify, in the variable intensity radiation (Ir(t)) received during use from said photoreceiver (200), a first constant part (I) and a second time variable part, and to generate said driving signal (v7'(t), i7'(t)) as a time variable signal, direct function of said second variable part.

12. Method for demodulation and reception of a data signal (s(t)) by means of free space optical radiation (108) even with indirect reflection, said method comprising:

- a step of receiving, through at least one photoreceiver (200), an optical radiation (108) with light radiation intensity (Ir(t)) wherein through said at least one photoreceiver, a voltage or current driving signal (v7(t), i7(t)) is generated,
- a first step of frequency demodulation by means of a FM demodulator (203), wherein following said frequency modulation step an intermediate signal s2'(t)) is generated, starting from said voltage or current driving signal (v7(t), i7(t));
- a second step of amplitude demodulation of said intermediate signal (s2'(t)) by means of an AM demodulator (202), wherein following said amplitude demodulation step, a replication signal of the transmitted data signal (s(t)) is generated, wherein the radiation intensity Ir(t) of said optical radiation (108) comprises a first constant part (I) and a second time variable part modulated in a hybrid manner with an AM/FM modulation and wherein said time variable part is lower in absolute value than the absolute value taken by said first constant part (I).

**Patentansprüche**

1. Sendervorrichtung (99) zum Senden mittels optischer Strahlung (108) im freien Raum, wobei die Vorrichtung wenigstens eine Modulatorstufe (101) umfasst, welche umfasst:

- einen Eingang (105), welcher dafür ausgelegt ist, während eines Betriebs ein zu modulierendes elektrisches Signal (s(t)) zu empfangen, und
- einen Ausgang (107), welcher in Richtung wenigstens eines Photoemitters (100) ein Spannungs- oder Stromansteuersignal (v7(t), i7(t)) sendet, für welches das elektrische Signal (s(t)) ein modulierendes Signal darstellt, wobei der wenigstens eine Photoemitter (100) eine optische Strahlung (108) mit einer Strahlungsintensität (Ir(t)) sendet, welche im Einklang mit dem Ansteuersignal (v7(t), i7(t)) variabel ist, und wobei zwischen dem Eingang und dem Ausgang der Modulatorstufe (101) eine Kaskade eines ersten AM-Modulators (102) und eines zweiten FM-Modulators (103) vorhanden ist, wobei der FM-Modulator (103) dem AM-Modulator (102) nachgelagert platziert ist und einen eigenen Ausgang aufweist, welcher direkt mit dem Ausgang (107) der Modulatorstufe (101) verbunden ist, wobei der AM-Modulator (102) einen Eingang aufweist, welcher direkt mit dem Eingang (105) der Modulatorstufe verbunden ist und welcher mittels des zu modulierenden elektrischen Signals (s(t)) direkt versorgt wird, und wobei der AM-Modulator (102) einen Ausgang aufweist, an welchem er ein Zwischensignal (s2(t)) erzeugt, welches dem FM-Modulator (103) als ein Eingang zugeführt wird, wobei die Sendervorrichtung (99) den wenigstens einen Photoemitter (100) umfasst und ferner eine Ansteuerstufe (104) für den wenigstens einen Photoemitter (100) umfasst, welche zwischen dem Ausgang (107) der Modulatorstufe (101) und dem wenigstens einen Photoemitter (100) eingefügt ist, wobei die Ansteuerstufe (104) dazu eingerichtet ist, das Ansteuersignal (v7(t), i7(t)) zu konditionieren, und Verarbeitungsmittel umfasst, welche wenigstens eine Betriebskonfiguration umfassen, so dass die im Einklang mit dem Ansteuersignal variable Strahlungsintensität (Ir(t)) einen ersten konstanten Teil (I), welcher unabhängig von dem Ansteuersignal ist, und einen zweiten zeitvariablen Teil umfasst, welcher eine direkte Funktion des Ansteuersignals ist, wobei ein Absolutwert des zeitvariablen Teils, welcher eine direkte Funktion des Ansteuersignals ist, niedriger ist als der durch den ersten konstanten Teil angenommene Absolutwert.

2. Sendervorrichtung (99) nach Anspruch 1, wobei das Zwischensignal (s2(t)), welches dem FM-Modulator (103) als ein Eingang zugeführt wird, ein Signal ist, welches dafür ausgelegt ist, eine Änderung der momentanen Frequenz zu bewirken, welche das Ansteuersignal (v7(t)), i7(t)) an dem Ausgang des FM-Modulators (103) annimmt, und/oder wobei das Zwischensignal (s2(t)) dem FM-Modulator (103) direkt als ein Eingang zugeführt wird.

**3.** Sendervorrichtung (99) nach einem oder mehreren der vorhergehenden Ansprüche, umfassend wenigstens einen Photoemitter (100); wobei der Photoemitter ein Photoemitter ist, dessen Lichtintensitätskurve als eine Funktion des Ansteuersignals (v7(t), i7(t)) nicht konstant ist, und/oder wobei der Photoemitter (100) dazu eingerichtet ist, eine optische Strahlung zu emittieren, und/oder während eines Betriebs eine optische Strahlung emittiert, welche im Einklang mit dem Ansteuersignal (v7(t), i7(t)) variabel ist.

**4.** Sendervorrichtung (99) nach einem oder mehreren der vorhergehenden Ansprüche, umfassend wenigstens eine Referenzfrequenzerzeugungsstufe (109), wobei:

- die Referenzfrequenzerzeugungsstufe (109) elektrisch mit einem Frequenzreferenzeingang des AM-Modulators (102) verbunden ist und wenigstens eine erste Referenzfrequenz (f0) für den AM-Modulator erzeugt oder wobei
- die Referenzfrequenzerzeugungsstufe (109) mittels eines eigenen ersten Ausgangs (109f) elektrisch mit einem Frequenzreferenzeingang des AM-Modulators (102) verbunden ist und ferner mittels eines eigenen zweiten Ausgangs (109s) elektrisch mit einem Frequenzreferenzeingang des FM-Modulators (103) verbunden ist und wenigstens eine erste Referenzfrequenz (f0) für den AM-Modulator (102) und eine zweite Referenzfrequenz (fc) für den FM-Modulator (103) erzeugt.

**5.** Sendervorrichtung (99) nach einem oder mehreren der vorhergehenden Ansprüche, wobei das Ansteuersignal als ein Ausgang von der Ansteuerstufe (104) und dem Photoemitter (100) zugeführt immer positiv und/oder größer als Null ist.

**6.** Sendervorrichtung (99) nach einem der vorhergehenden Ansprüche, wobei die Modulatorstufe (101) dazu eingerichtet ist, mit einem analogen Signal versorgt zu werden, und wobei dem Eingang (105) der Modulatorstufe (101) vorgelagert ein Digital-Analog-Wandler vorhanden ist.

**7.** Verfahren zur Modulation und zum Senden eines Datensignals (s(t)) mittels optischer Strahlung (108) im freien Raum, wobei das Verfahren umfasst:

- einen ersten Schritt einer Amplitudenmodulation des Datensignals (s(t)) mittels eines AM-Modulators (102), wobei auf den Amplitudenmodulationsschritt folgend ein Zwischensignal (s2(t)) erzeugt wird, von welchem das Datensignal (s(t)) ein modulierendes Signal ist;
- einen zweiten Schritt einer Frequenzmodulation des Zwischensignals (s2(t)) mittels eines FM-Modulators (103), wobei auf den Frequenzmodulationsschritt folgend ein Spannungs- oder Stromansteuersignal (v7(t), i7(t)) erzeugt wird;
- einen Schritt eines Einstellens der Lichtstrahlungsintensität (Ir(t)) der optischen Strahlung (108), welche durch wenigstens einen Photoemitter (107) emittiert wird, mittels des Ansteuersignals (v7(t), i7(t)),
wobei
- das Datensignal (s(t)) ein Basisbandsignal und/oder ein Audiosignal ist und direkt dem Eingang des AM-Modulators (102) zugeführt wird;
und/oder
- wobei das Ansteuersignal (v7(t), i7(t)) direkt auf den Frequenzmodulationsschritt folgend erzeugt wird;

und wobei in dem Schritt des Einstellens der Lichtstrahlungsintensität die Strahlungsintensität (Ir(t)) im Einklang mit dem Ansteuersignal variabel gestaltet wird und einen ersten kontinuierlichen Teil (I), welcher unabhängig von dem Ansteuersignal ist, und einen zweiten zeitvariablen Teil umfasst, welcher eine direkte Funktion des Ansteuersignals (v7(t), i7(t)) ist, wobei ein Absolutwert des zweitvariablen Teils, welcher eine direkte Funktion des Ansteuersignals (v7(t), i7(t)) ist, niedriger ist als der durch den ersten kontinuierlichen Teil (I) angenommene Absolutwert.

**8.** Verfahren nach Anspruch 7, umfassend einen Schritt eines Bereitstellens des Ansteuersignals (v7(t), i7(t)) einem Photoemitter (100), dessen Lichtintensitätskurve als eine Funktion des Ansteuersignals (v7(t), i7(t)) nicht konstant ist, und/oder wobei der Photoemitter (100) dazu eingerichtet ist, eine optische Strahlung zu emittieren,

und/oder während eines Betriebs eine optische Strahlung emittiert, welche im Einklang mit dem Ansteuersignal (v7(t), i7(t)) variabel ist', und/oder umfassend einen Schritt eines Bereitstellens des Ansteuersignals (v7(t), i7(t)) einem Photoemitter (100), welcher ein Durchlassband aufweist, welches größer ist als das Durchlassband des Ansteuersignals (v7(t), i7(t)).

**9.** Verfahren nach einem oder mehreren der vorhergehenden Ansprüche 7 bis 8, wobei das Ansteuersignal als ein Ausgang von der Ansteuerstufe (104) und dem Photoemitter (100) zugeführt immer positiv und/oder größer als Null ist.

10. Verfahren nach einem oder mehreren der vorhergehenden Ansprüche 7 bis 9, umfassend:

> - einen Schritt eines Erzeugens einer ersten Referenzfrequenz (f0) für die Amplitudenmodulation
> oder
> - einen Schritt eines Erzeugens einer ersten Referenzfrequenz (f0) für die Amplitudenmodulation und einer zweiten Referenzfrequenz (fc) für die Frequenzmodulation,

> wobei der Schritt des Erzeugens der ersten Referenzfrequenz und/oder der ersten und der zweiten Referenzfrequenz mittels eines Versorgens eines AM-Modulators (102) und/oder eines AM-Modulators (102) und eines FM-Modulators (103) mit einem Referenzfrequenzgenerator (109) durchgeführt wird.

11. Empfängervorrichtung (199) zum Empfangen optischer Strahlung im freien Raum, umfassend wenigstens eine Demodulatorstufe (201), welche umfasst:

> - einen Eingang (205), welcher dafür ausgelegt ist, während eines Betriebs ein durch einen damit verbundenen Photoempfänger (200) moduliertes und erzeugtes Spannungs- oder Stromansteuersignal (v7(t), i7(t)) zu empfangen, und welcher während eines Betriebs eine ebenfalls reflektierte optische Strahlung (108) empfängt, und
> - einen Ausgang (207), welcher ein Ausgangsreplikationssignal (s'(t)) sendet, für welches das elektrische Signal (s(t)) ein modulierendes Signal darstellt,
> und wobei zwischen dem Eingang und dem Ausgang der Demodulatorstufe (201) eine Kaskade eines ersten FM-Demodulators (203) und eines zweiten AM-Demodulators (202) vorhanden ist, wobei der FM-Demodulator (203) dem AM-Demodulator (202) vorgelagert platziert ist, wobei der AM-Demodulator (202) einen Eingang aufweist, welcher direkt mit dem Ausgang des FM-Demodulators (203) verbunden ist, wobei der Eingang (205) der Demodulatorstufe (201) mittels des als ein Ausgang von dem Photoempfänger (200) erzeugten Ansteuersignals (v7(t), i7(t)) direkt zugeführt wird und/oder wobei der FM-Demodulator (203) einen Ausgang aufweist, an welchem er ein Zwischensignal (s2'(t)) erzeugt, welches dem AM-Demodulator (202) in einem Eingang zugeführt wird, wobei die Empfängervorrichtung (199) ferner eine dem Photoempfänger (200) nachgelagert platzierte Filterstufe umfasst, wobei die Filterstufe dafür ausgelegt ist, eine als ein Ausgang von dem Photoempfänger (200) erzeugte kontinuierliche Komponente eines elektrischen Signals aus/von einer als ein Ausgang von dem Photoempfänger erzeugten variablen Komponente eines elektrischen Signals zu filtern und/oder zu separieren und/oder zu eliminieren, wobei die Filterstufe dafür ausgelegt ist, das Ansteuersignal (v7(t), i7(t)) als einen Ausgang zu erzeugen,
und/oder wobei der wenigstens eine Photoempfänger (200) eine Ansteuerstufe für die Demodulatorstufe (201) bereitstellt, wobei die Ansteuerstufe zwischen dem Eingang (205) der Demodulatorstufe (201) und dem wenigstens einen Photoempfänger (200) eingefügt ist, wobei die Ansteuerstufe beim Erzeugen des Ansteuersignals (v7(t), i7(t)) dazu eingerichtet ist, in der während eines Betriebs von dem Photoempfänger (200) empfangenen Strahlung (Ir(t)) mit variabler Intensität einen ersten konstanten Teil (I) und einen zweiten zeitvariablen Teil zu identifizieren und das Ansteuersignal (v7'(t), i7'(t)) als ein zeitvariables Signal zu erzeugen, welches eine direkte Funktion des zweiten variablen Teils ist.

12. Verfahren zur Demodulation und zum Empfang eines Datensignals (s(t)) mittels optischer Strahlung (108) im freien Raum selbst mit indirekter Reflexion, wobei das Verfahren umfasst:

> - einen Schritt eines Empfangens, durch wenigstens einen Photoempfänger (200), einer optischen Strahlung (108) mit einer Lichtstrahlungsintensität (Ir(t)), wobei durch den wenigstens einen Photoempfänger ein Spannungs- oder Stromansteuersignal (v7(t), i7(t)) erzeugt wird,
> - einen ersten Schritt einer Frequenzdemodulation mittels eines FM-Demodulators (203), wobei auf den Frequenzmodulationsschritt folgend, beginnend von dem Spannungs- oder Stromansteuersignal (v7(t), i7(t)) ein Zwischensignal (s2'(t)) erzeugt wird;
> - einen zweiten Schritt einer Amplitudendemodulation des Zwischensignals (s2'(t)) mittels eines AM-Demodulators (202), wobei auf den Amplitudendemodulationsschritt folgend ein Replikationssignal des gesendeten Datensignals (s(t)) erzeugt wird, wobei die Strahlungsintensität (Ir(t)) der optischen Strahlung (108) einen ersten konstanten Teil (I) und einen zweiten zeitvariablen Teil umfasst, welcher auf eine hybride Weise mit einer AM/FM-Modulation moduliert ist, und wobei ein Absolutwert des zeitvariablen Teils niedriger ist als der Absolutwert des ersten konstanten Teils (I).

**Revendications**

1.  Dispositif transmetteur (99) pour une transmission à l'aide d'un rayonnement optique (108) en espace libre, ledit dispositif comprenant au moins un étage modulateur (101) comprenant :

    - une entrée (105) adaptée pour recevoir durant l'utilisation un signal électrique (s(t)) à moduler, et

    - une sortie (107) transmettant vers au moins un photoémetteur (100) un signal de pilotage (v7(t), i7(t)) de tension ou de courant pour lequel ledit signal électrique (s(t)) représente un signal de modulation, où ledit au moins un photoémetteur (100) transmet un rayonnement optique (108) avec une intensité de rayonnement (Ir(t)) variable selon ledit signal de pilotage (v7(t), i7(t)), et dans lequel, entre ladite entrée et ladite sortie dudit étage modulateur (101), une cascade d'un premier modulateur AM (102) et d'un second modulateur FM (103) est présente, ledit modulateur FM (103) étant placé en aval dudit modulateur AM (102) et ayant une propre sortie directement connectée à la sortie (107) dudit étage modulateur (101), dans lequel ledit modulateur AM (102) présente une entrée directement connectée à ladite entrée (105) dudit étage modulateur et est directement alimentée à l'aide dudit signal électrique (s(t)) pour être modulée et dans lequel ledit modulateur AM (102) présente une sortie sur laquelle il génère un signal intermédiaire (s2(t)) alimenté comme une entrée audit modulateur FM (103) le dispositif transmetteur (99) comprenant ledit au moins un photoémetteur (100), et comprenant en outre un étage de pilotage (104) pour ledit au moins un photoémetteur (100) interposé entre ladite sortie (107) dudit étage modulateur (101) et ledit au moins un photoémetteur (100), dans lequel ledit étage de pilotage (104) est configuré pour conditionner ledit signal de pilotage (v7(t), i7(t)) et comprend un moyen de traitement comprenant au moins une configuration de fonctionnement de sorte que ladite intensité de rayonnement (Ir(t)) variable selon ledit signal de pilotage comprend une première partie constante (I), indépendante dudit signal de pilotage et une seconde partie variable dans le temps qui est une fonction directe dudit signal de pilotage, dans lequel ladite partie variable dans le temps qui est une fonction directe dudit signal de pilotage est inférieure en valeur absolue à la valeur absolue prise par ladite première partie constante.

2.  Dispositif transmetteur (99) selon la revendication 1, dans lequel ledit signal intermédiaire (s2(t)) alimenté comme une entrée audit modulateur FM (103) est un signal adapté pour amener une variation de la fréquence instantanée que ledit signal de pilotage (v7(t), i7(t)) prend à la sortie dudit modulateur FM (103), et/ou dans lequel ledit signal intermédiaire (s2(t)) est directement alimenté comme une entrée au modulateur FM (103).

3.  Dispositif transmetteur (99) selon l'une ou plusieurs des revendications précédentes, comprenant ledit au moins un photoémetteur (100) ; ledit photoémetteur étant un photoémetteur dont une courbe d'intensité de lumière comme une fonction dudit signal de pilotage (v7(t), i7(t)) n'est pas constante et/ou dans lequel ledit photoémetteur (100) est configuré pour émettre et/ou qui durant l'utilisation émet un rayonnement optique variable selon ledit signal de pilotage (v7(t), i7(t)).

4.  Dispositif transmetteur (99) selon l'une ou plusieurs des revendications précédentes, comprenant au moins un étage de génération de fréquence de référence (109), dans lequel :

    - ledit étage de génération de fréquence de référence (109) est électriquement connecté à une entrée de référence de fréquence dudit modulateur AM (102) et génère au moins une première fréquence de référence (f0) pour ledit modulateur AM, ou dans lequel

    - ledit étage de génération de fréquence de référence (109) est électriquement connecté à une entrée de référence de fréquence dudit modulateur AM (102) à l'aide d'une première sortie propre (109f) et est en outre électriquement connecté à une entrée de référence de fréquence dudit modulateur FM (103) à l'aide d'une seconde sortie propre (109s) et génère au moins une première fréquence de référence (f0) pour ledit modulateur AM (102) et une seconde fréquence de référence (fc) pour ledit modulateur FM (103).

5.  Dispositif transmetteur (99) selon l'une ou plusieurs des revendications précédentes, dans lequel le signal de pilotage comme une sortie pour ledit étage de pilotage (104) et alimenté audit photoémetteur (100) est toujours positif et/ou supérieur à zéro.

6.  Dispositif transmetteur (99) selon l'une quelconque des revendications précédentes, dans lequel ledit étage modulateur (101) est configuré pour être alimenté avec un signal analogique et dans lequel, en amont de ladite entrée (105) dudit étage modulateur (101), un convertisseur numérique/analogique est présent.

7.  Procédé de modulation et de transmission d'un signal de données (s(t)) à l'aide d'un rayonnement optique (108) en espace libre, ledit procédé comprenant :

- une première étape de modulation d'amplitude dudit signal de données (s(t)) à l'aide d'un modulateur AM (102), dans lequel suite à ladite étape de modulation d'amplitude, est généré un signal intermédiaire (s2(t)) dont ledit signal de données (s(t)) est un signal de modulation ;
- une seconde étape de modulation de fréquence dudit signal intermédiaire (s2(t)) à l'aide d'un modulateur FM (103), dans lequel suite à ladite étape de modulation de fréquence, un signal de pilotage (v7(t), i7(t)) de tension ou de courant est généré ;
- une étape d'ajustement de l'intensité de rayonnement (Ir(t)) de lumière dudit rayonnement optique (108) émis par au moins un photoémetteur (107) à l'aide dudit signal de pilotage (v7(t), i7(t)),
dans lequel
- le signal de données (s(t)) est un signal de bande de base et/ou un signal audio, et est directement alimenté à l'entrée dudit modulateur AM (102) ; et/ou
- dans lequel ledit signal de pilotage (v7(t), i7(t)) est directement généré suite à ladite étape de modulation de fréquence ;

et dans lequel dans ladite étape d'ajustement de l'intensité du rayonnement de lumière, l'intensité de rayonnement (Ir(t)) est rendue variable selon ledit signal de pilotage et comprend une première partie continue (I), indépendante dudit signal de pilotage, et une seconde partie variable dans le temps, une fonction directe dudit signal de pilotage (v7(t), i7(t)), dans lequel ladite partie variable dans le temps qui est une fonction directe dudit signal de pilotage (v7(t), i7(t)) est inférieure en valeur absolue à la valeur absolue prise par ladite première partie continue (I).

8. Procédé selon la revendication 7, comprenant une étape consistant à fournir ledit signal de pilotage (v7(t), i7(t)) à un photoémetteur (100) dont une courbe d'intensité de lumière comme une fonction dudit signal de pilotage (v7(t), i7(t)) n'est pas constante et/ou dans lequel ledit photoémetteur (100) est configuré pour émettre et/ou qui durant l'utilisation émet un rayonnement optique variable selon ledit signal de pilotage (v7(t), i7(t)),
et/ou comprenant une étape consistant à fournir ledit signal de pilotage (v7(t), i7(t)) à un photoémetteur (100) qui présente une bande passante supérieure à la bande passante dudit signal de pilotage (v7(t), i7(t)).

9. Procédé selon l'une ou plusieurs des revendications précédentes de 7 à 8, dans lequel le signal de pilotage comme une sortie dudit étage de pilotage (104) et alimenté audit photoémetteur (100) est toujours positif et/ou supérieur à zéro.

10. Procédé selon l'une ou plusieurs des revendications précédentes de 7 à 9, comprenant :

- une étape consistant à générer une première fréquence de référence (f0) pour ladite modulation d'amplitude ou
- une étape consistant à générer une première fréquence de référence (f0) pour ladite modulation d'amplitude et une seconde fréquence de référence (fc) pour ladite modulation de fréquence,

dans lequel ladite étape de génération de ladite première fréquence de référence et/ou lesdites première et seconde fréquence de référence sont exécutées par l'alimentation d'un modulateur AM (102) et/ou d'un modulateur AM (102) et d'un modulateur FM (103) avec un générateur de fréquence de référence (109).

11. Dispositif récepteur (199) pour recevoir un rayonnement optique en espace libre comprenant au moins un étage démodulateur (201) comprenant :

- une entrée (205) adaptée pour recevoir, durant l'utilisation, un signal de pilotage (v7(t), i7(t)) de tension ou de courant modulé et généré à travers un photorécepteur (200) connecté à celui-ci et pour recevoir durant l'utilisation un rayonnement optique (108), également reflété, et
- une sortie (207) transmettant un signal de réplication de sortie (s'(t)) pour lequel ledit signal électrique (s(t)) représente un signal de modulation,
et dans lequel, entre ladite entrée et ladite sortie dudit étage démodulateur (201), une cascade d'un premier démodulateur FM (203) et d'un second démodulateur AM (202) est présente, ledit démodulateur FM (203) étant placé en amont dudit démodulateur AM (202), dans lequel ledit démodulateur AM (202) présente une entrée directement connectée à la sortie dudit démodulateur FM (203),
le récepteur dans lequel ladite entrée (205) dudit étage démodulateur (201) est directement alimentée à l'aide dudit signal de pilotage (v7(t), i7(t)) produit comme une sortie dudit photorécepteur (200) et/ou dans lequel ledit démodulateur FM (203) présente une sortie sur laquelle il génère un signal intermédiaire (s2'(t)) alimenté en entrée audit démodulateur AM (202), le dispositif récepteur (199) comprenant en outre un étage de filtrage placé en aval dudit photorécepteur (200), ledit étage de filtrage étant adapté pour filtrer et/ou séparer et/ou éliminer une composante de signal électrique continue produite comme une sortie depuis ledit photorécepteur (200) à partir d'une composante de signal électrique variable produite comme une sortie depuis ledit photorécepteur, ledit étage de filtrage étant adapté pour créer ledit signal de pilotage (v7(t), i7(t)) comme une sortie, et/ou dans lequel ledit au moins un photorécepteur (200) alimente un étage de pilotage pour ledit étage démodulateur (201), ledit étage de pilotage étant interposé entre ladite entrée (205) dudit étage démodulateur (201) et ledit au moins un photorécepteur (200), dans lequel ledit étage de pilotage dans la génération dudit signal de pilotage (v7(t), i7(t)), est configuré pour identifier, dans l'intensité de rayonnement (Ir(t)) variable reçue durant l'utilisation depuis ledit photorécepteur (200), une première partie constante (I) et une seconde partie variable dans le temps, et pour générer ledit signal de pilotage (v7'(t), i7'(t)) comme un signal variable dans le temps, fonction directe de ladite seconde partie variable.

12. Procédé de démodulation et de réception d'un signal de données (s(t)) à l'aide d'un rayonnement optique (108) en espace libre même avec réflexion indirecte, ledit procédé comprenant :

- une étape de réception, à travers au moins un photorécepteur (200), d'un rayonnement optique (108) avec une intensité de rayonnement (Ir(t)) de lumière dans laquelle à travers ledit au moins un photorécepteur, un signal de pilotage (v7(t), i7(t)) de tension ou de courant est généré,
- une première étape de démodulation de fréquence à l'aide d'un démodulateur FM (203), dans lequel suite à ladite étape de modulation de fréquence un signal intermédiaire (s2'(t)) est généré, en commençant à partir dudit signal de pilotage (v7(t), i7(t)) de tension ou de courant ;
- une seconde étape de démodulation d'amplitude dudit signal intermédiaire (s2'(t)) à l'aide d'un démodulateur AM (202), dans lequel suite à ladite étape de démodulation d'amplitude, un signal de réplication du signal de données (s(t)) transmis est généré, dans lequel l'intensité de rayonnement (Ir(t)) dudit rayonnement optique (108) comprend une première partie constante (I) et une seconde partie variable dans le temps modulée d'une manière hybride avec une modulation AM/FM et dans lequel ladite partie variable dans le temps est inférieure en valeur absolue à la valeur absolue prise par ladite première partie constante (I).

FIG.1

EP 3 729 686 B1

FIG.2

FIG.3

FIG.4

EP 3 729 686 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1089478 A2
- US 4054794 A